# EUROPEAN PATENT SPECIFICATION

(11) **EP 2 921 800 B1**
(45) Date of publication and mention of the grant of the patent: **07.03.2018**
(21) Application number: 15159459.5
(22) Date of filing: 17.03.2015
(51) Int. Cl.: F24J 2/52, H01L 31/042

(54) **CLAMPING MEANS FOR FASTENING FRAMELESS SOLAR MODULES**
KLEMMVORRICHTUNG ZUM BEFESTIGEN VON RAHMENLOSEN SOLARMODULEN
MOYENS DE SERRAGE POUR LA FIXATION DE MODULES SOLAIRES SANS CADRES

(30) Priority: 17.03.2014 NL 2012450
(43) Date of publication of application: 23.09.2015
(73) Proprietor: REBOR B.V., 1053 ZA Amsterdam (NL)
(72) Inventor: Borro, René, 6466 GK Kerkrade (NL)
(74) Representative: Renkema, Jaap

(56) References cited:
- EP-A1- 2 575 182
- EP-A1- 2 679 929
- EP-A2- 1 734 588
- EP-A2- 2 159 847
- DE-A1-102005 061 709
- DE-U1-202008 009 241
- FR-A1- 2 963 089
- US-A- 5 274 978
- US-A1- 2011 068 244

## Description

### FIELD OF THE INVENTION

The Invention relates to clamping means for attaching frameless solar panels to sloping roofs, to an assembly comprising the clamping means and frameless solar panels, as well as a process for attaching frameless solar panels to a sloping roof using the clamping means.

### BACKGROUND

It Is well known to place solar panels on existing roofs. These solar panels are usually framed into an aluminum frame and can be mounted individually onto sloping roofs with the aid of complex clamping means.

US 5,274,978 describes clamping means for fastening solar panels to a flat support plate. The solar panels are placed from the gutter of the roof to the top of the roof.

A disadvantage of assembling bottom up is the fact that the last row or column of solar modules at the top of the roof are difficult to mount due to lack of workspace, furthermore It is difficult to get off the roof. Another disadvantage is repair of the assembly. In case of a damaged or malfunctioning solar panel, the panels need to be dis-assembled top-down, which is difficult from a practical point of view.

There Is a need for a simple, reliable and watertight way of mounting solar panels on a roof, whereby the solar panels replace traditional tiles present on roofs. It is also an object of the present invention to provide an effective way of placing solar panels on a roof, starting from the top of a sloping roof downwards to the gutter of the roof.

### SUMMARY

The present invention relates to clamping means having an S-shaped profile for mounting a frameless solar panel on a sloping roof, comprising
a baseplate (10) having a thin portion (11), with a thickness d1 and having through holes (30) for receiving fastening means and a thick portion (13) with a thickness d2 and a transition (12) between the thin portion (10) and the thick portion (13) and wherein d2>d1, the transition can be oblique,
a first profile (20) extending from the thick portion (13) of the baseplate (10) and having a U-shape with a first bight portion (14) connecting a common shank (15) to the thick portion (13) of the baseplate (10) and
a second profile (21) being spaced from the thick portion (13) of the baseplate (10) by the first profile and having a U shape with a second bight portion (16) connecting a second shank (17) to the common shank (15),
said shanks (15,17) being substantially parallel to the base plate (10),
said first profile (20) comprises an opening In the direction of the thin portion (11) of the baseplate, said second profile (21) comprises an opening in the opposite direction,
said first and second profiles having heights h1 and h2 suitable for receiving frameless solar panels.

The clamping means according to the Invention have the advantage that a substantial watertight connection is made between the clamping means and a solar panel. Moreover the attaching of solar panels to the clamping means Is easy and the assembly has excellent capability to drain water to the gutter of the sloping roof. Moreover, the assembly can replace existing roof tiles and combines the functions of covering of an isolated roof panel and providing electricity when the sun is shining.

Another advantage of the assembly according to the invention is the cooling of the solar panels by flow of air between the solar panels and the isolated roof panels. In wintertime, the same space between the solar panels and isolated roof panels can be heated with suitable heating means, in order to remove any snow on the solar panels and to facilitate generation of electricity even in wintertime.

The clamping means can be mounted on a sloping roof, preferably on a sloping isolated roof. Most preferably the clamping means are attached to wooden slats mounted on an isolated sloping roof. The presence of wooden slats on the isolated roof can accommodate the flow of air to cool down solar panels after Installation and during use.

The clamping means comprise two U-shaped profiles for receiving frameless solar panels. The height of the U-shaped profiles is designed in such a way that they can receive the frameless solar panels and form a substantially watertight connection with the solar panels.

The second profile pointing towards the top side of the roof for receiving a solar panel from above and having an opening in the opposite direction of the baseplate, allows a solar panel being mounted In the second profile, while leaving space for attaching the baseplate to the roof using the through holes on a lower part of the roof. Thus the clamping means can be advantageously used for mounting solar panels on a roof from the top down.

In one embodiment, the profiles may be provided with weather resistant rubber in for example a U shape, to receive a solar panel and which may have the advantage to prevent any pressure on the solar panels which may eventually lead to breaking of the panel. The rubber can be placed inside and aligned with the U shaped profile of the clamping means.

The invention also relates to the use of clamping means according to the invention to prepare a roof comprising solar panels. The invention also relates to a sub-assembly of a clamping means and a solar panel, which can be prefabricated in a factory and subsequently transported to a building site and can be placed as a subassembly unit on the roof. Preparation of a sub-assembly has the advantage that the assembly of the roof can be carried out in an efficient way and that a roof can be mounted in a short period of time.

The invention further relates to a solar panel roof comprising the clamping means according to the invention.

### BRIEF DESCRIPTION OF THE DRAWINGS.

Figure 1. schematically illustrates a side view of an embodiment of clamping means having S shaped profile according to the invention;
Figure 2. schematically illustrates a top view of a first embodiment of clamping means according to the invention;
Figure 3. schematically illustrates a side view of an embodiment of assembly comprising the clamping means according to the invention;
Figure 4. schematically illustrates a side view of a detail of the assembly comprising the clamping means according to the invention;
Figure 5. schematically illustrates a side view of a second embodiment of clamping means according to the invention;
Figure 6. schematically illustrates a side view of a third embodiment of clamping means according to the invention;
Figure 7. schematically illustrates of a side view of an embodiment of clamping means according to the invention;
Figure 8. schematically illustrates an exploded front view of the assembly according to the invention;
Figure 9. schematically illustrates a front view of the assembly according to the invention.

### DETAILED DESCRIPTION OF THE INVENTION.

It is noted that the figures are only schematic and are not drawn to scale, unless otherwise stated. Same reference numbers have been used for same elements in different embodiments where possible.

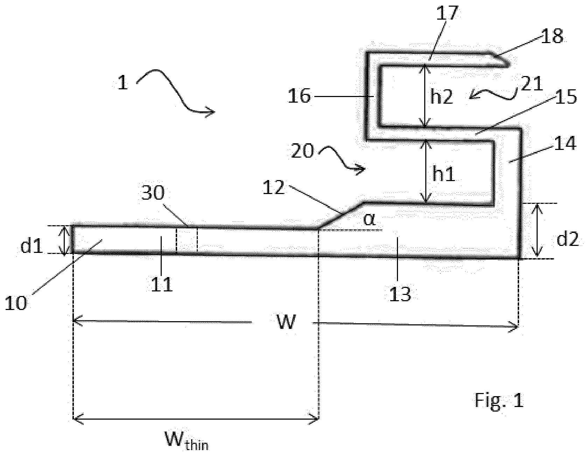

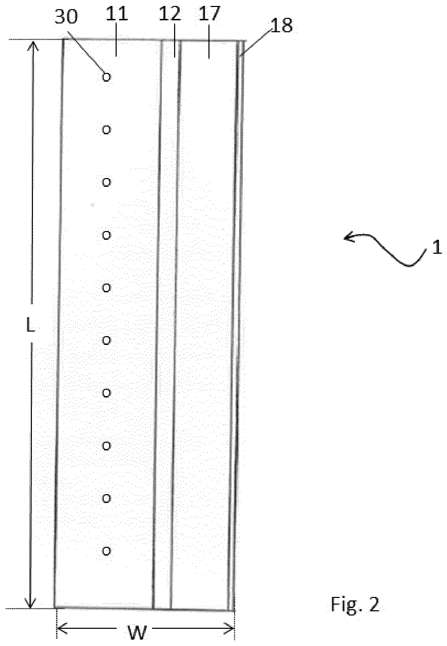

Referring to figures 1 and 2, the clamping means 1 according to the present invention comprise a base plate 10, which contains two portions 11 and 13 which differ in thickness. Portion 11 is a relatively thin portion, having a thickness d1, and which portion contains one or more holes 30 for receiving fastening means for fastening the clamping means on a sloping roof. Portion 13 is a relatively thick portion, having a thickness d2 which forms part of the first profile 20. Between portion 11 and portion 13 is a transition 12, which facilitates a solar panel to be mounted into the clamping means and slide into the first profile 20. The transition 12 can be oblique having an angle α preferably ranging between 10 and 40 degrees relative to the horizontal plane of the baseplate. Thickness d1 ranges preferably between 2 and 4 mm, while thickness d2 is at least 1 mm larger than d1, and ranges preferably between 4 and 10 mm. The width W of the baseplate 10 ranges between 3 and 10 cm, preferably between 4 and 7 cm. The width of the thin portion Wₜₕᵢₙ preferably ranges between 1 and 5 cm. The length L of the clamping means 1 preferably substantially equals the length of the solar panel, and ranges preferably between 60 and 200 cm.

The clamping means 1 comprise a first profile 20 which is U shaped, and which is adapted to receive a solar panel. The first profile 20 comprises an opening which is oriented downwardly to the gutter of the sloping roof when the clamping means is fixed to the sloping roof. The first profile 20 extends from the thick portion 13 of the baseplate 10 and has a U-shape with a first bight portion 14 connecting a common shank 15 to the thick portion 13 of the baseplate 10. The first profile 20 is adapted to receive a solar panel. Preferably, the connection between the first profile and the solar panel is water tight, which can be achieved by providing a first profile having a height h1 which is substantially the same as the thickness of the solar panel.

The clamping means 1 also contain a second profile 21 being spaced from the thick portion 13 of the baseplate 10 by the first profile 20 and having a U shape with a second bight portion 16 connecting a second shank 17 to the common shank 15. The second profile comprises an opening which is oriented upwardly to the top of the sloping roof when the clamping means is fixed to the sloping roof. The second profile is adapted to receive a solar panel, and preferably provides a watertight connection with the solar panel. This can be achieved by providing a second profile having a height h2 which is substantially the same as the thickness of the solar panel. The second shank 17 preferably contains an angled finish 18 to facilitate discharging water from the solar panel downwards to the gutter of the roof.

Figure 2 shows holes 30 in the thin portion 11 of baseplate 10. The distance between the holes can in principle be chosen freely, and preferably align with the wooden slats 200 mounted on the sloping roof. Fastening means can be inserted through the holes 30 to fixedly connect the clamping means 1 to the wooden slats 200.

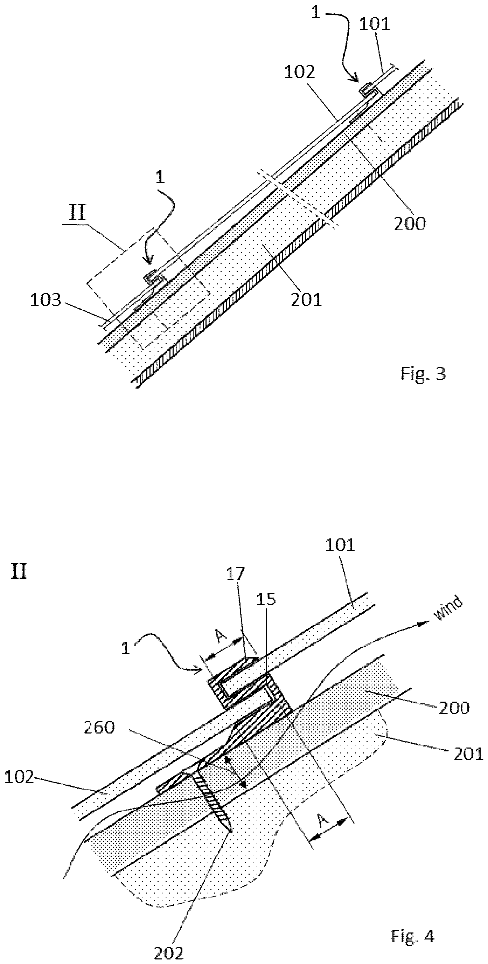

Figure 3 shows an assembly comprising the clamping means 1 and subsequent solar panels 101, 102, and 103. The clamping means 1 have been attached to one or more wooden slats 200 which are mounted onto an isolated roof panel 201. The clamping means 1 are attached in such a way that the thin portion 11 of the baseplate 10 is facing downwards to the gutter of the roof. The solar panel 101 is mounted upwardly from the panel 102, and overlaps with panel 102 in a shingle-form arrangement. In this way rainwater may flow from the solar panel 101 to solar panel 102 and further on downwards to panel 103 and ultimately to the gutter of the roof. Section II in figure 3 is enlarged in figure 4.

Figure 4 shows the assembly with clamping means 1, upward extending solar panel 101 and downward extending solar panel 102. Clamping means 1 has been attached to wooden slats 200 by fastening means, like for example a screw 202, nail or any other suitable fastening means. The fastening means can make a connection between the clamping means 1 and wooden slats 200 through holes in the thin portion of the baseplate. Wind or airflow can move between the solar panels 101 and 102 and the isolated roof panel 201 in order to cool the solar panels when in use. During wintertime, this area can be used to heat the solar panels and let snow melt away and enable the production of electricity during wintertime. In the embodiment shown in fig 4 the length A of the common shank 15 and the length A of the second shank 17 is substantially the same.

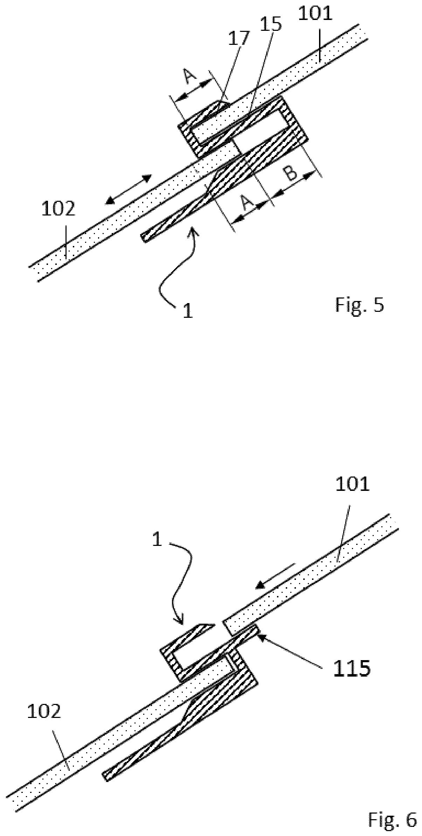

Figure 5 shows another embodiment of the present invention, wherein the length of the shanks 15 and 17 differ. The length of common shank 15 is extended to a length (A)+(B), which allows the solar panel 102 to move between the upper and lower clamping means that keep the solar panel in a fixed position relative to the roof. In case length (B) is larger than length (A), it is possible to remove the panel 102 from the roof, without the need to remove all panels positioned downwards from panel 102 and loosen all clamping means downwards of panel 102.

Fig 6 shows an embodiment where the common shank 15 is extended with a lid 115 for easier mounting of solar panel 101.

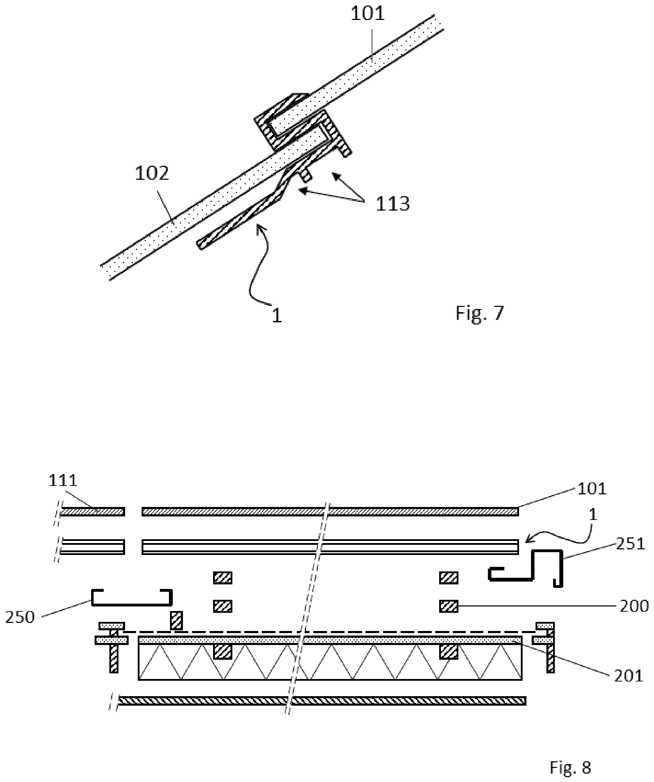

Fig 7 shows an embodiment wherein the thick portion 13 of the baseplate 10 contains recesses to save on raw material cost and weight of the clamping means 1.

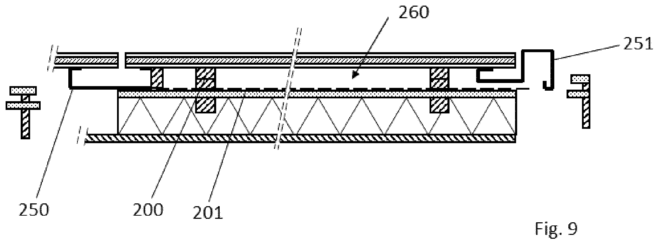

Fig 8 and 9 show a front view of the assembly containing clamping means 1, solar panel 101, wooden slats 200 mounted on the isolated roof panel 201.

Vertical drainage 250 can be placed on the isolated roof panel to drain any rainwater that may fall or leak between adjacent solar panels 101 and 111. End profile 251 can be used as a finishing frame at the side of the solar panel roof. Space 260 is used to create a natural flow of air between solar panels and isolated roof panel. In summertime this airflow can be used to cool the solar panels, in wintertime the airflow can be heated with heating means (not shown) to melt away any snow that may have fallen un the solar panels.

## Claims

1. Clamping means having an S-shaped profile for mounting a frameless solar panel on a sloping roof, comprising
a baseplate (10) having a thin portions (11) with a thickness d1 and having through holes for receiving fastening means and a thick portion (13) with a thickness d2 and a transition (12) between the thin portion (10) and the thick portion (13), wherein d2>d1, a first profile (20) extending from the thick portion (13) of the baseplate (10) and having a U-shape with a first bight portion (14) connecting a common shank (15) to the thick portion (13) of the baseplate (10) and
a second profile (21) being spaced from the thick portion (13) of the baseplate (10) by the first profile and having a U shape with a second bight portion (16) connecting a second shank (17) to the common shank (15),
said shanks (15, 17) being substantially parallel to the base plate (10).
said first profile (20) comprising an opening In the direction of the thin portion (11) of the baseplate (10), said second profile (21) comprising an opening in the opposite direction,
said first and second profiles having heights h1 and h2 suitable for receiving frameless solar panels.

2. Clamping means according to claim 1, wherein thickness d1 ranges between 2 and 4 mm. and d2 ranges between 4 and 10 mm, and wherein d2 is at least 1 mm larger than d1.

3. Clamping means according to claim 1 or claim 2, wherein the transition (12) is oblique having an angle α ranging between 10 and 40 degrees.

4. Clamping means according to anyone of the claims 1-3, wherein the clamping means have a width (W) ranging between 3 and 10 cm, and a length (L) ranging between 60 and 200 cm.

5. Assembly comprising the clamping means according to anyone of claims 1-4 and frameless solar panels.

6. Use of the clamping means according to anyone of claims 1-4 for fixedly connecting solar panels to provide a sloping roof.

## Patentansprüche

1. Spannmittel mit S-förmigem Profil zum Befestigen eines rahmenlosen Solarpanels auf einem Schrägdach, umfassend
eine Grundplatte (10), die einen dünnen Abschnitt (11) mit einer Dicke d1 aufweist und die Durchgangslöcher zur Aufnahme vom Befestigungsmitteln und einen dicken Abschnitt (13) mit einer Dicke d2 und einen Übergang (12) zwischen dem dünnen Abschnitt (10) und dem dicken Abschnitt (13) aufweist, wobei d2 > d 1,
ein erstes Profil (20), das sich von dem dicken Abschnitt (13) der Grundplatte (10) erstreckt und eine U-Form mit einem ersten Biegeabschnitt (14) aufweist, der einen gemeinsamen Schaft (15) mit dem dicken Abschnitt (13) der Grundplatte (10) verbindet, und
ein zweites Profil (21), das von dem dicken Abschnitt (13) der Grundplatte (10) durch das erste Profil beabstandet ist und eine U-Form mit einem zweiten Biegeabschnitt (16) aufweist, der einen zweiten Schaft (17) mit dem gemeinsamen Schaft (15) verbindet,
wobei die Schafte (15, 17) im Wesentlichen parallel zu der Grundplatte (10) sind,
das erste Profil (20) umfassend eine Öffnung in der Richtung des dünnen Abschnitts (11) der Grundplatte (10), das zweite Profil (21) umfassend eine Öffnung in der entgegengesetzten Richtung,
wobei das erste und das zweite Profil Höhen h1 und h2 aufweisen, die zum Aufnehmen rahmenloser Solarpanels geeignet sind.

2. Spannmittel nach Anspruch 1, wobei die Dicke d1 im Bereich zwischen 2 und 4 mm und d2 im Bereich zwischen 4 und 10 mm liegt, und wobei d2 mindestens 1 mm größer als d1 ist.

3. Spannmittel nach Anspruch 1 oder 2, wobei der Übergang (12) schräg ist und einen Winkel α im Bereich zwischen 10 und 40 Grad aufweist.

4. Spannmittel nach einem der Ansprüche 1 bis 3, wobei die Spannmittel eine Breite (W) im Bereich zwischen 3 und 10 cm und eine Länge (L) im Bereich zwischen 60 und 200 cm aufweisen.

5. Anordnung, umfassend die Spannmittel nach einem der Ansprüche 1 bis 4 und rahmenlose Solarpanels.

6. Nutzung der Spannmittel nach einem der Ansprüche 1 bis 4 zum festen Verbinden von Solarpanels, um ein Schrägdach bereitzustellen.

## Revendications

1. Moyen de serrage présentant un profil en S pour le montage d'un panneau solaire sans cadre sur un toit en pente, comprenant :
une plaque de base (10) présentant une partie fine (11) avec une épaisseur d1 et présentant des trous de passage destinés à recevoir des moyens de fixation, ainsi qu'une partie épaisse (13) avec une épaisseur d2 et une transition (12) entre la partie fine (10) et la partie épaisse (13), où d2 > d1,
un premier profil (20) s'étendant à partir de la partie épaisse (13) de la plaque de base (10) et présentant une forme en U avec une première partie d'anse (14) reliant une queue commune (15) à la partie épaisse (13) de la plaque de base (10), et
un deuxième profil (21) espacé de la partie épaisse (13) de la plaque de base (10) par le premier profil et présentant une forme en U avec une deuxième partie d'anse (16) reliant une deuxième queue (17) à la queue commune (15),
lesdites queues (15, 17) étant substantiellement parallèles à la plaque de base (10),
ledit premier profil (20) comprenant une ouverture dans la direction de la partie fine (11) de la plaque de base (10), ledit deuxième profil (21) comprenant une ouverture dans la direction opposée,
lesdits premier et deuxième profils présentant des hauteurs h1 et h2 appropriées pour recevoir des panneaux solaires sans cadre.

2. Moyen de serrage selon la revendication 1, dans lequel l'épaisseur d1 varie entre 2 et 4 mm, et d2 varie entre 4 et 10 mm, et dans lequel d2 est plus grand que d1 d'au moins 1 mm.

3. Moyen de serrage selon la revendication 1 ou la revendication 2, dans lequel la transition (12) est oblique et présente un angle α variant entre 10 et 40 degrés.

4. Moyen de serrage selon l'une quelconque des revendications 1 à 3, dans lequel le moyen de serrage présente une largeur (W) variant entre 3 et 10 cm, et une longueur (L) variant entre 60 et 200 cm.

5. Assemblage comprenant le moyen de serrage selon l'une quelconque des revendications 1 à 4 et des panneaux solaires sans cadre.

6. Utilisation du moyen de serrage selon l'une quelconque des revendications 1 à 4, destiné à relier fixement des panneaux solaires pour réaliser un toit en pente.
